# EUROPEAN PATENT SPECIFICATION

(11) **EP 3 701 788 B1**
(45) Date of publication and mention of the grant of the patent: **10.05.2023**
(21) Application number: 18870251.8
(22) Date of filing: 24.10.2018
(51) Int. Cl.: A01D 34/90, F02B 63/02, F02N 11/08

(54) **GARDENING TOOL**
GARTENWERKZEUG
OUTIL DE JARDINAGE

(30) Priority: 24.10.2017 CN 201711002705; 22.03.2018 CN 201810240598; 11.04.2018 CN 201721379832 U; 05.06.2018 CN 201820869697 U; 05.06.2018 CN 201810569599; 05.06.2018 CN 201820868449 U
(43) Date of publication of application: 02.09.2020
(73) Proprietor: Suzhou Cleva Precision Machinery & Technology Co., Ltd., Suzhou, Jiangsu 215000 (CN)
(72) Inventor: KONG, Zhao, Suzhou, Jiangsu 215000 (CN); WEI, Juan, Suzhou, Jiangsu 215000 (CN); ZHANG, Tianrong, Suzhou, Jiangsu 215000 (CN); YIN, Weirui, Suzhou, Jiangsu 215000 (CN)
(74) Representative: Murgitroyd & Company
(86) International application number: PCT/CN2018/111633
(87) International publication number: WO 2019/080867

(56) References cited:
- WO-A1-2017/121396
- CN-A- 103 039 183
- CN-A- 103 959 990
- CN-A- 105 508 113
- CN-Y- 201 286 243
- JP-A- 2006 217 843
- JP-A- 2017 108 644
- JP-B2- 4 071 242
- US-A1- 2006 248 731
- US-A1- 2016 149 520

## Description

### TECHNICAL FIELD

The invention relates to a garden tool.

### BACKGROUND

In the landscaping industry, gasoline engine garden tools gradually replaced manual garden tools, reducing labor intensity and improving work efficiency. Garden tools often used are grass trimmers, brush cutters, chain saws, and the like. The existing gasoline engine garden tool adopts a hand-pulling rebounding recoil starter, and the starting of the engine is realized by pulling a feed rope by hand, starting a drive plate and then driving a crankshaft to rotate. In terms of operability, manually pulling back the feed rope to start is more laborious and labor-intensive in operation; in terms of service performance, if the feed rope is pulled repeatedly for a long time, the feed rope may bend or break, which may cause difficulty in starting. Therefore, the electric starting mode is being widely adopted. However, the electric start button and the starter of the existing gasoline engine garden tool are connected by a whole power wire, which brings great trouble to the assembly and maintenance of the engine. No matter the engine or the start button needs to be maintained, it is needed to disassemble the main handle, take out the power wire, and cut off the connection between the power wire and another component, so the process is very troublesome, and the labor cost is wasted. On the other hand, the existing gasoline engine grass trimmer is connected by a whole power wire, and in case of failure, the existing gasoline engine grass trimmer needs to be disassembled from the whole machine alone for maintenance, and particularly when it needs to be returned to the factory for maintenance, since both ends of the power wire are connected in the housing, it is necessary to disassemble the handle assembly or the power assembly itself at least partially and remove the power wire before it can be disassembled from the whole machine, so the existing gasoline engine grass trimmer is inconvenient to assemble and disassemble, and great troubles are brought to the assembly and maintenance of the engine.

WO2017/121396A1 discloses a grass trimmer with an electrically-started engine. An electrical start switch is positioned on both dies of a signal control zone on a connecting rod between the main body and grass cutting head.

### SUMMARY

The object of the present invention is to provide a garden tool, which aims to solve the technical problems of starting operation inconvenience and high failure rate in the prior art.

As the conception, the technical solution adopted by the present invention is as follows: a garden tool comprising a power assembly and a handle assembly, the handle assembly is provided with a start key which is electrically connected with the power assembly; characterized in that the handle assembly is provided with a cover capable of at least partially shielding the start key, and the cover can be opened under the driving of external force so as to operate the start key; a reset member is provided between the cover and the handle assembly, the reset member can drive the cover to be closed.

One side of the cover may be hinged with the handle assembly.

The handle assembly may be provided with a first shaft, and the cover may be provided with a shaft hole matched with the first shaft.

The reset member may be a torsional spring sleeved on the first shaft, wherein the one end of the torsional spring abuts against the handle assembly, and the other end of the torsional spring abuts against the cover.

The handle assembly may be a U-shaped handle assembly, wherein the U-shaped handle assembly comprises a U-shaped rod, a left handle and a right handle which are connected to the two ends of the U-shaped rod, and the start key is arranged on the right handle.

The right handle may comprise a first gripping portion and a first operating portion, wherein the first operating portion is arranged at one end of the first gripping portion, the first operating portion protrudes outwards relative to the periphery of the first gripping portion, and a first protruding portion is arranged at the other end of the first gripping portion along the circumferential direction. The extension direction of the first gripping portion and the extension direction of the first operating portion may be set at an included angle A, and A is 0° to 90°.

The start key may be arranged on the top surface of the first operating portion, wherein one side edge of the cover is hinged to the top surface of the first operating portion.

The handle assembly may be further provided with a flameout key, a self-locking key and a throttle key, wherein the flameout key is arranged on the left side surface of the first operating portion, the self-locking key is arranged on the top surface of the first gripping portion, and the throttle key is arranged on the bottom surface of the first gripping portion.

The handle assembly may comprise a straight handle assembly and an auxiliary handle assembly, wherein the start key is arranged on the straight handle assembly.

The straight handle assembly may comprise a second gripping portion and a second operating portion, wherein the second operating portion is arranged at one end of the second gripping portion, and a second protruding portion is arranged at the other end of the second gripping portion along the circumferential direction.

The straight handle assembly may further comprise a battery mounting portion, wherein the battery mounting portion is arranged below the second operating portion, and the second operating portion and the battery mounting portion respectively protrude outwards in the upper direction and the lower direction relative to the outer periphery of the second gripping portion.

The extension direction of the second gripping portion and the extension direction of the second operating portion may be set at an included angle B, and B is 0° to 90°.

The start key may be arranged on the top surface of the second operating portion, wherein one side edge of the cover is hinged to the top surface of the second operating portion.

The cover may be a transparent material.

The handle assembly may be provided with an indicator, wherein the indicator is arranged in the coverage range of the cover.

The maximum opening angle of the cover may be 60°.

The power assembly may comprise an internal combustion engine and a starting motor, wherein the starting motor is used for starting the internal combustion engine, and the start key is electrically connected with the starting motor; the garden tool further comprises a battery pack for supplying power to the starting motor, and the battery pack is detachably arranged on the handle assembly or the power assembly.

The garden tool may further comprise a link assembly and a working head assembly, wherein one end of the link assembly is connected with the power assembly, the other end of the link assembly is connected with the working head assembly, and the handle assembly is connected with the link assembly.

The garden tool may be a brush cutter or a grass trimmer.

The invention has the beneficial effects that: in case of the garden tool according to the present invention, in a natural state the cover is in the closed state to shield the start key, so that the start key cannot be directly touched, thereby avoiding start caused by unintended touch, and ensuring safety; when needing start, the cover is driven by external force to be in an open state, and then the start key can be pressed, so that the use is convenient and fast; therefore, the start key and the cover are arranged in a matched mode, so that the garden tool can be started only through two steps, the operating specification is met, and the safety is high; after the operation is finished, the cover is automatically closed under the action of the reset member.

Another object of the present invention is to provide a garden tool, to solve the technical problem in the prior art that the mounting, maintenance and disassembly of the whole power wire are inconvenient.

As the above conception, the technical solution adopted by the present invention is as follows: a garden tool comprises a power assembly, and a handle assembly arranged at interval with the power assembly, the handle assembly is provided with a start key which is electrically connected with the power assembly through a cable assembly, wherein the cable assembly includes:
cables, comprising at least a first cable and a second cable, and the first cable and the second cable being detachably connected;
a wire clip, which is sleeved on the periphery of the joint of the first cable and the second cable, and the wire clip is detachably connected with the cables.

The end of the first cable may have a first terminal, the end of the second cable may have a second terminal, and the second terminal may be detachably connected with the first terminal.

The first terminal may be matched with the second terminal in a plugging way.

One of the first terminal and the second terminal may be a male terminal, wherein the other is a female terminal.

The wire clip may comprise a wire clip first portion and a wire clip second portion which can be buckled, wherein the wire clip first portion and the wire clip second portion can cover the joint of the first cable and the second cable after being buckled.

The wire clip first portion and the wire clip second portion can be buckled to form an accommodating cavity, and the joint of the first cable and the second cable is located in the accommodating cavity.

The two ends of the accommodating cavity may be provided with openings, wherein the first cable and the second cable respectively pass through the openings at the two ends.

One side of the wire clip first portion and one side of the wire clip second portion may be connected by a wire clip connecting portion, wherein the wire clip connecting portion is a bendable connecting sheet.

The other side of the wire clip first portion away from the wire clip connecting portion may be provided with at least one first buckling member, wherein the other side of the wire clip second portion away from the wire clip connecting portion is provided with at least one second buckling member corresponding to the first buckling piece.

The inner wall of the wire clip may be provided with supporting members, wherein the supporting members are a rib plates protruding inwards from the inner wall of the wire clip, and the rib plates of the wire clip first portion and the wire clip second portion are matched with each other to clamp the joint of the first cable and the second cable.

The periphery of the cable may be sleeved with a cable sleeve; wherein the cable sleeve is a corrugated tube, and the inner wall of the cable clip is provided with a corrugated structure corresponding to the outer wall of the corrugated tube.

The wire clip may be integrally formed by insulating material.

The power assembly may comprise an internal combustion engine and a starting motor, wherein the starting motor is used for starting the internal combustion engine, and the start key is electrically connected with the starting motor; the garden tool further comprises a battery pack for supplying power to the starting motor, and the battery pack is detachably arranged on the handle assembly or the power assembly.

The present invention has another beneficial effects that: in case of the garden tool according to the present invention, the cable comprises the first cable and the second cable, and the first cable and the second cable are detachably connected, then the existing whole cable is divided into a plurality of cables, so that it is convenient to assembly, disassembly, maintain and transport, thereby saving time and reducing labor intensity; the arrangement of the wire clip protects the joint of the first cable and the second cable, prevents the joint from being exposed and avoids short circuit or loosening; and the wire clip and the cable can be detachably connected, so that the assembly and the disassembly are convenient.

### BRIEF DESCRIPTION OF THE DRAWINGS

Fig. 1 is a schematic structural view of a garden tool according to Embodiment 1 of the present invention;
Fig. 2 is a schematic structural view illustrating the right handle of the garden tool according to Embodiment 1 of the present invention;
Fig. 3 is a left side view of the right handle of Fig. 2 with the cover in a closed position;
Fig. 4 is a left side view of the right handle of Fig. 2 with the cover in an open position;
Fig. 5 is a cross-sectional view of the right handle of Fig. 2;
Fig. 6 is an enlarged view of portion P1 of Fig. 5;
Fig. 7 is a schematic structural view of a garden tool according to Embodiment 2 of the present invention;
Fig. 8 is a top plan view of the straight handle assembly of Fig. 7;
Fig. 9 is a left side view of the straight handle assembly of Fig. 7 with the cover in a closed position;
Fig. 10 is a left side view of the straight handle assembly of Fig. 7 with the cover in an open position;
Fig. 11 is a sectional view taken along line A1-A1 of Fig. 8;
Fig. 12 is an enlarged view of a portion P2 of Fig. 11;
Fig. 13 is a schematic connection diagram of a prior art cable;
Fig. 14 is a schematic connection diagram of a cable provided by an embodiment of the present invention;
Fig. 15 is a schematic view of a cable clamp, in an open state, provided by an embodiment of the present invention;
Fig. 16 is a sectional view taken along line A2-A2 of Fig. 15;
Fig. 17 is a schematic view of the cable clamp, in a buckled state, provided by the present invention;
Fig. 18 is a sectional view taken along line A3-A3 of Fig. 17.

### DETAILED DESCRIPTION OF THE INVENTION

In order to make the technical problems solved, the technical solutions adopted and the technical effects achieved by the present invention clearer, the technical solutions of the present invention are further described below by way of specific embodiments with reference to the accompanying drawings. It is to be understood that the specific embodiments described herein are merely illustrative of the invention and that no limitation of the invention is intended. It should be further noted that, for the convenience of description, only some but not all of the features relevant to the present invention are shown in the drawings.

### Embodiment 1

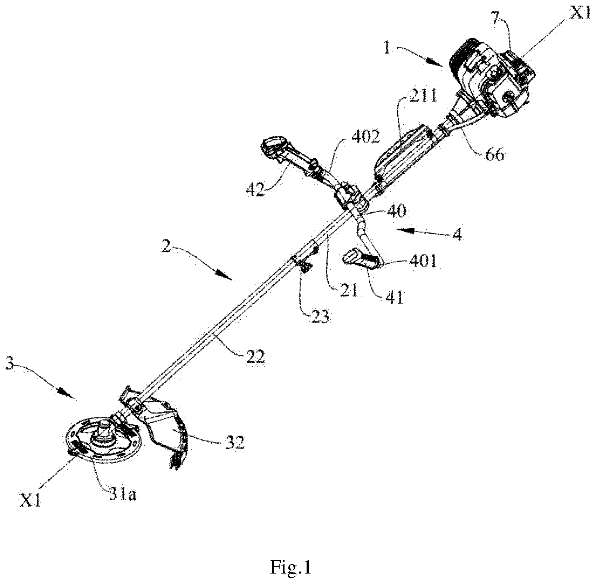

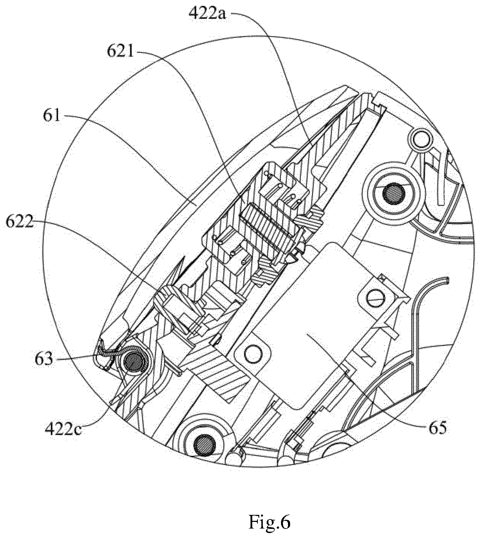

As shown in Figs. 1 to 6, in the present embodiment, there is provided a garden tool, and specifically, there is provided a brush cutter. As shown in Fig. 1, the brush cutter comprises a power assembly 1, a link assembly 2, a working head assembly 3 and a handle assembly. In the present embodiment, the handle assembly is a U-shaped handle assembly 4.

The power assembly 1 is connected to the rear end of the link assembly 2; the working head assembly 3 is connected to the front end of the link assembly 2; the U-shaped handle assembly 4 is connected to the middle part of the link assembly 2, and generally, because the mass of the power assembly 1 is relatively large, compared with the working head assembly 3, the distance between the U-shaped handle assembly 4 and the power assembly 1 is shorter, and therefore the U-shaped handle assembly 4 is held more labor-saving during operation.

The power assembly 1 includes a compact internal combustion engine and a starting motor for starting the internal combustion engine. Specifically, the internal combustion engine is a gasoline engine.

The link assembly 2 is a telescopic rod extending in the front-rear direction (i.e., axis X1), and includes a rear link 21 and a front link 22 which are substantially rigid. Wherein, the rear end of the rear link 21 is connected with the power assembly 1; the front end of the rear link 21 is slidably connected with the rear end of the front link 22, and the front end of the front link 22 is connected with the working head assembly 3. The rear link 21 and the front link 22 are capable of sliding relative to each other along the axis, so that the distance between the two ends of the link assembly 2 (i.e., the distance between the power assembly 1 and the working head assembly 3) is increased or decreased. A fastening device 23 is further provided between the rear link 21 and the front link 22, and the rear link 21 and the front link 22 can be maintained in a relatively fixed state by operating the fastening device 23. In addition, a strap connecting portion 211 is provided on the rear link 21 for fixing the strap.

The working head assembly 3 includes a cutter head 31a and a shield 32. Wherein, the cutter head 31a is arranged at the front end of the front link 22; the shield 32 is mounted on the front link 22 behind the cutter head 31a. Of course, in other embodiments, a person skilled in the art may replace the cutter head 31a with another working head such as a grass trimming head, a pruning shear, and a pole saw.

In the present embodiment, the U-shaped handle assembly 4 is mounted between the front end on the rear link 21 and the strap connecting portion 211 for gripping in use. The U-shaped handle assembly 4 includes a handle crossbar 40, a handle left bar 401, a handle right bar 402, a left handle 41, and a right handle 42. Wherein, the handle crossbar 40 extends approximately along the left-right direction and is connected with the rear link 21; the handle left bar 401 and the left handle 41 extend upwards approximately, the handle left bar 401 extends upwards from the left end of the handle crossbar 40, and the left handle 41 is mounted on the upper end of the handle left bar 401; the handle right bar 402 and the right handle 42 also extend upwards approximately, the handle right bar 402 extends upwards from the right end of the handle crossbar 40, and the right handle 42 is mounted on the upper end of the handle right bar 402. In the present embodiment, the U-shaped handle assembly 4 can selectively rotate forwards or backwards with the handle crossbar 40 as the axis, and the requirement of comfortable operation for users with different heights/arm lengths can be met in cooperation with the extension and contraction of the link assembly 2.

The U-shaped handle assembly 4 is provided with control keys for controlling the brush cutter. The control keys include, but not limited to, a start key 621, a flameout key 623, a self-locking key 641, a throttle key 642, etc., which are all provided on the right handle 42 and are arranged for easy right-handed grasping and operation. Specifically, the start key 621 is configured as a push-button switch that can be automatically reset, and the flameout key 623 is configured as a boat-type switch that can be automatically reset.

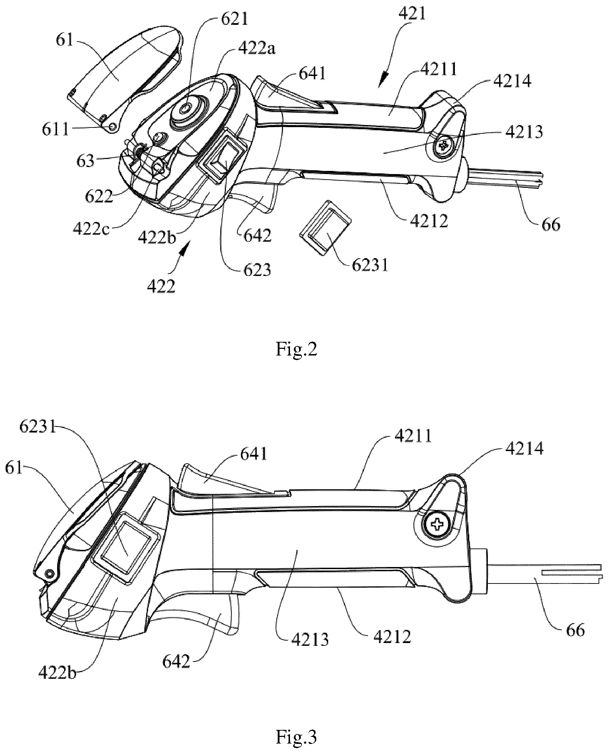

As shown in Figs. 2 to 6, the right handle 42 includes a first gripping portion 421 and a first control portion, and in the present embodiment, the first control portion includes a first operating portion 422. The shape of the first gripping portion 421 is configured to be suitable for gripping, and the lengthwise extension direction X3 thereof is substantially coincided with the extension direction of the handle right bar 402. The first gripping portion 421 includes a first gripping portion top surface 4211 and a first gripping portion bottom surface 4212 which are arranged oppositely, and further includes a first gripping portion left side surface 4213 and a first gripping portion right side surface which are arranged oppositely. The first gripping portion top surface 4211 and the first gripping portion bottom surface 4212 are provided with first rubber coatings. When the first gripping portion 421 is gripped with the right hand, the palm and the four curved fingers substantially enclose the first gripping portion top surface 4211, the first gripping portion right side surface and the first gripping portion bottom surface 4212, and the thumb selectively rests on the first gripping portion top surface 4211 or the first gripping portion left side surface 4213.

The first gripping portion 421 further includes a first gripping portion tail end, and the first gripping portion tail end forms a first protruding portion 4214 at least in the circumferential direction of the first gripping portion 421, which is beneficial to preventing the gripping hand from slipping off the tail portion. The first operating portion 422 is disposed at the other end of the first gripping portion 421 away from the first gripping portion tail end, and the first operating portion 422 protrudes outward relative to the outer periphery of the first gripping portion 421, which is beneficial to preventing the gripping hand from slipping off the front portion.

The first operating portion 422 has a first operating portion top surface 422a and a first operating portion left side surface 422b. The first operating portion left side surface 422b is substantially parallel to the first gripping portion left side surface 4213, that is, the first operating portion left side surface 422b and the first gripping portion left side surface 4213 together constitute a left side surface of the right handle 42. The first operating portion top surface 422a is substantially perpendicular to the first operating portion left side surface 422b.

The extension direction of the first gripping portion 421 and the extension direction of the first operating portion 422 are set at an included angle A. Specifically, an angle A is defined between the extension direction X2 of the first control portion top surface 422a and the lengthwise extension direction X3 of the first gripping portion 421, where A is 0° to 90°, preferably 20° to 60°, more preferably 40° to 50°, and in the present embodiment, A is 45° or 46°.

In the present embodiment, the start key 621 is provided on the first operating portion top surface 422a, the flameout key 623 is provided on the first operating portion left side surface 422b, the self-locking key 641 is provided on the first gripping portion top surface 4211 close to the first control portion, and the throttle key 642 is provided on the first gripping portion bottom surface 4212 close to the first control portion. This arrangement enables the control keys to be operated with only one right hand while gripping the right handle 42. Specifically, the self-locking key 641 and the throttle key 642 can be easily operated using the palm with four fingers, and the start key 621 or the flameout key 623 can be easily operated using the thumb. In the present embodiment, a waterproof cover 6231 is provided outside the flameout key 623.

To meet the requirements of safety specifications, at least two steps are required to achieve machine start-up. The U-shaped handle assembly 4 is provided with a cover 61 capable of at least partially covering the start key 621, and the cover 61 can be opened under external driving force so as to operate the start key. Specifically, the cover 61 is provided on the right handle 42, and one side of the cover 61 is hinged to the first operating portion top surface 422a.

In a natural state, the cover 61 shields the start key 621 so that the start key 621 cannot be directly touched. When the start key 621 needs to be operated, it is necessary to open the cover 61 first and keep the cover 61 in the opened state, and then the start key 621 can be operated. In the present embodiment, the first operating portion 422 is only provided with the start key 621, the cover 61 engaged with the start key 621, the flameout key 623, the self-locking key 641, and the throttle key 642, and can implement all functions of operating the brush cutter and meet safety requirements without additionally providing other keys or protection devices.

The cover 61 is rotatably connected to the U-shaped handle assembly 4. The end of the first control portion top surface 422a away from the tail end of the first gripping portion is provided with a first shaft 422c, an end of the cover 61 is provided with a shaft hole 611, and the first shaft 422c is matched with the shaft hole 611, so that the cover 61 is pivotally connected to the first operating portion 422. Further, the maximum angle at which the cover 61 is opened is restricted to 60°, that is, the opening angle of the cover 61 is 0° to 60°. Preferably, the maximum angle at which the cover 61 is opened is restricted to 40° to 55°. Still further, the maximum angle at which the cover 61 is opened is restricted to 45° or 50°.

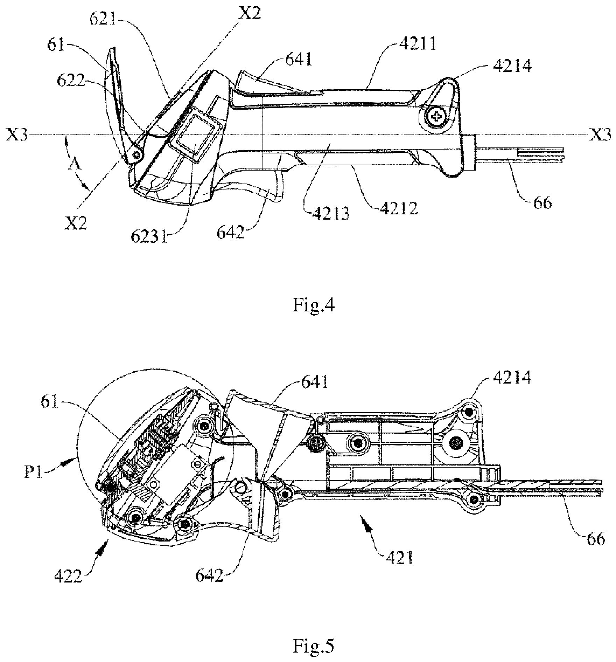

A reset member is provided between the cover 61 and the handle assembly, and the reset member can drive the cover 61 to close. In the present embodiment, the reset member is an elastic member. Specifically, the elastic member is located between the cover 61 and the first operating portion 422, and the elastic member enables the cover 61 to be buckled on the start key 621. Specifically, the elastic member is configured as a torsion spring 63 sleeved on the first shaft 422c, one end of which abuts against the cover 61, and the other end of which abuts against the first operating portion 422. In a natural state, the cover 61 is in a closed state under the action of the torsion spring 63, as shown in Fig. 3, and the start key 621 is hidden under the cover 61 and cannot be directly operated, so that the brush cutter is prevented from being unintentionally started. When the brush cutter needs to be started, a force which enables the free end of the cover 61 to rotate in the direction away from the first control portion top surface 422a is applied to the cover 61 by using a thumb or other external force, the cover 61 is jacked up by overcoming the elastic force of the torsion spring 63, so that the cover 61 is in an open state, as shown in Fig. 4, then the thumb is quickly stretched into the cover 61, and the start key 621 is pressed, so that the micro switch 65 arranged below the start key 621 is activated, the control key is electrically connected with the power assembly 1, and then the start motor is electrified and started to drive the crankshaft of the engine to rotate, so that the engine is started. When the thumb is withdrawn from under the cover 61 in the open state, the cover 61 is restored to the closed state due to the elastic restoring force of the torsion spring 63. In other embodiments, to meet the needs of the left-handed population, control keys may also be provided on the left handle 41 and arranged on the principle of facilitating left-handed operation.

### Embodiment 2

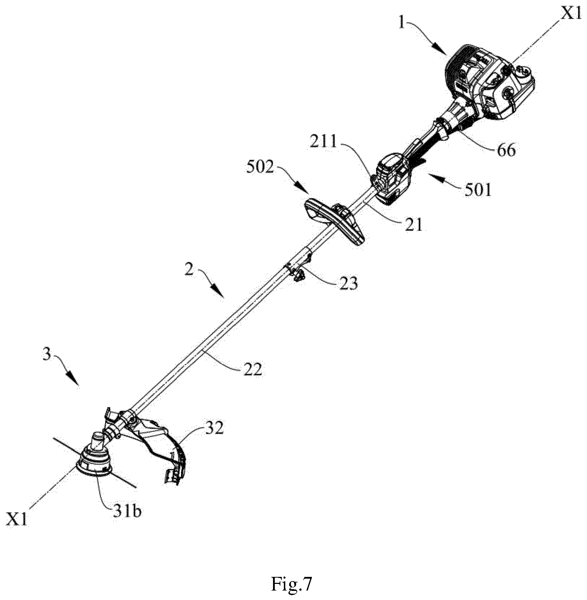

Figs. 7 to 12 show Embodiment 2, wherein the same or corresponding parts as or to Embodiment 1 are provided with the same reference numerals as in Embodiment 1. For the sake of simplicity, only the differences between Embodiment 2 and Embodiment 1 will be described. The difference is that the handle assembly comprises a straight handle assembly 501 and an auxiliary handle assembly 502, and the control keys are arranged on the straight handle assembly 501.

Specifically, Fig. 7 discloses a grass trimmer, which comprises a power assembly 1, a link assembly 2, a working head assembly 3, a straight handle assembly 501 and an auxiliary handle assembly 502. Wherein, the power assembly 1 is connected with the rear end of the link assembly 2; the working head assembly 3 is connected to the front end of the link assembly 2; the straight handle assembly 501 is connected to the middle part of the link assembly 2, generally, because the mass of the power assembly 1 is relatively large, compared with the working head assembly 3, the distance between the straight handle assembly 501 and the power assembly 1 is shorter, so that the straight handle assembly 501 is more labor-saving to grip during operation; the auxiliary handle assembly 502 is connected to the middle part of the linkage assembly 2, typically provided on the side of the straight handle assembly 501 facing away from the power assembly 1. A transmission shaft 24 is provided in the link assembly 2, and the transmission shaft 24 transmits the rotation of the power assembly 1 to the working head assembly 3.

The working head assembly 3 includes a grass trimming head 31b and a shield 32. Wherein, the grass trimming head 31b is mounted at the front end of the front link 22; the shield 32 is mounted on the front link 22 and behind the grass trimming head 31b. Of course, in other embodiments, the grass trimming head 31b may be replaced by another working head such as a cutter head, pruning shears, or a pole saw.

The straight handle assembly 501 is mounted on the rear link 21 and located between the strap connecting portion 211 and the power assembly 1 for gripping in use. The straight handle assembly 501 includes a second gripping portion 51 and a second control portion, and further, the second control portion includes a second operating portion 52 and a battery mounting portion 53.

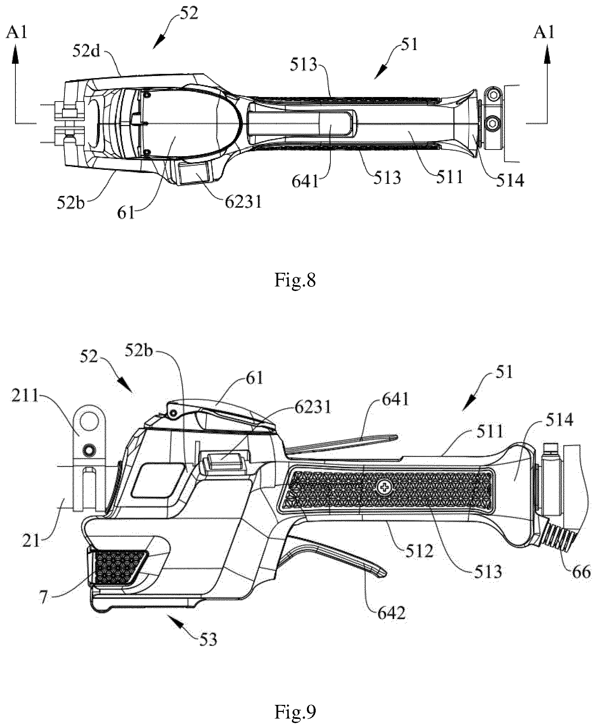

Referring to Figs. 9 to 12, the lengthwise extension direction of the second gripping portion 51 is the same as the extension direction X1 of the link assembly 2. Specifically, the second gripping portion 51 is configured to wrap around the outer periphery of the rear link 21. The second operating portion 52 and the battery mounting portion 53 are provided in front of the second gripping portion 51, wherein the second operating portion 52 is located on the upper side of the rear link 21, and the battery mounting portion 53 is located on the lower side of the rear link 21 relatively.

Control keys for controlling the grass trimmer include, but not limited to, a start key 621, a flameout key 623, a self-locking key 641, a throttle key 642, etc., which are all provided on the straight handle assembly 501 and are arranged in a right-handed manner for easy handling and operation. Specifically, the start key 621 is configured as a push-button switch that can be automatically reset, and the flameout key 623 is configured as a boat-type switch that can be automatically reset.

Specifically, the shape of the second gripping portion 51 is configured to be suitable for gripping, and includes a second gripping portion top surface 511 and a second gripping portion bottom surface 512 which are oppositely arranged, and further includes a second gripping portion left side surface 513 and a second gripping portion right side surface 514 which are oppositely arranged. The second gripping portion left side surface 513 and the second gripping portion right side surface 514 are provided with second rubber coating. When the second gripping portion 51 is gripped with the right hand, the palm and the four curved fingers substantially enclose the second gripping portion top surface 511, the second gripping portion right side surface 514 and the second gripping portion bottom surface 512, and the thumb selectively rests on the second gripping portion top surface 511 or the second gripping portion left side surface 513.

The second gripping portion 51 further includes a second gripping portion tail end, and the second gripping portion tail end forms a second protruding portion 514 at least on the circumference of the second gripping portion 51, which is beneficial to preventing the gripping hand from slipping off the tail portion. In operating the grass trimmer, the auxiliary handle assembly 502 is gripped by the left hand.

The second operating portion 52 and the battery mounting portion 53 are disposed at the other end of the second gripping portion 51 away from the tail end of the second gripping portion, the second operating portion 52 protrudes upward relative to the plane of the second gripping portion top surface 511, and the battery mounting portion 53 protrudes downward relative to the plane of the second gripping portion bottom surface 512. As a whole, the portion constituted by the second operating portion 52 and the battery mounting portion 53 protrudes outward relative to the outer periphery of the second gripping portion 51 at least in both the up and down directions, contributing to preventing the gripped hand from slipping off the front portion.

The second control portion has a second control portion top surface 52a and a second control portion left side surface 52b. The second control portion left side surface 52b is substantially parallel to the second gripping portion left side surface 513, that is, the second control portion left side surface 52b and the second gripping portion left side surface 513 together constitute the left side surface of the straight handle assembly 501. The second control portion top surface 52a is substantially perpendicular to the second control portion left side surface 52b, and the extension direction of the second grip 51 and the extension direction of the second operating portion 52 are set at an included angle B, in the present embodiment, an angle B is defined between the extension direction X4 of the second control portion top surface 52a and the extension direction X1 of the second grip 51, where B is 0° to 90°, preferably B is 0° to 30°, further preferably B is 5° to 15°, and in the present embodiment, B is 10°.

The start key 621 is provided on the second control portion top surface 52a, the flameout key 623 is provided on the second control portion left side surface 52b, the self-locking key 641 is provided on the second gripping portion top surface 511 close to the second control portion, and the throttle key 642 is provided on the second gripping portion bottom surface 512 close to the second control portion. This arrangement enables the control keys to be operated with only one right hand when gripping the straight handle assembly 501. Specifically, the self-locking key 641 and the throttle key 642 can be easily operated using the palm with four fingers, and the start key 621 or the flameout key 623 can be easily operated using the thumb. In the present embodiment, a waterproof cover 6231 is provided outside the flameout key 623. Further, for convenience of operation, the flameout key 623 is disposed on a boss structure on the second control portion left side surface 52b, such that the flameout key 623 is inclined to the left, i.e., the operating surface of the flameout key 623 faces upward and leftward.

In the present embodiment, the cover 61 is provided on the straight handle assembly 501. In a natural state, the cover 61 shields the start key 621, and the start key 621 cannot be directly operated. When the start key 621 needs to be operated, it is necessary open the cover 61 first and keep the cover 61 in the opened state, then the start key 621 can to be operated. In the present embodiment, the end of the second control portion top surface 52a away from the tail end of the second gripping portion is provided with a second shaft 52c, and the shaft hole 611 of the cover 61 is matched with the second shaft 52c, so that the cover 61 is pivotally connected to the second operating portion 52. The torsion spring 63 is sleeved on the second shaft 52c, one end of the torsion spring 63 abuts against the cover 61, and the other end abuts against the second operating portion 52.

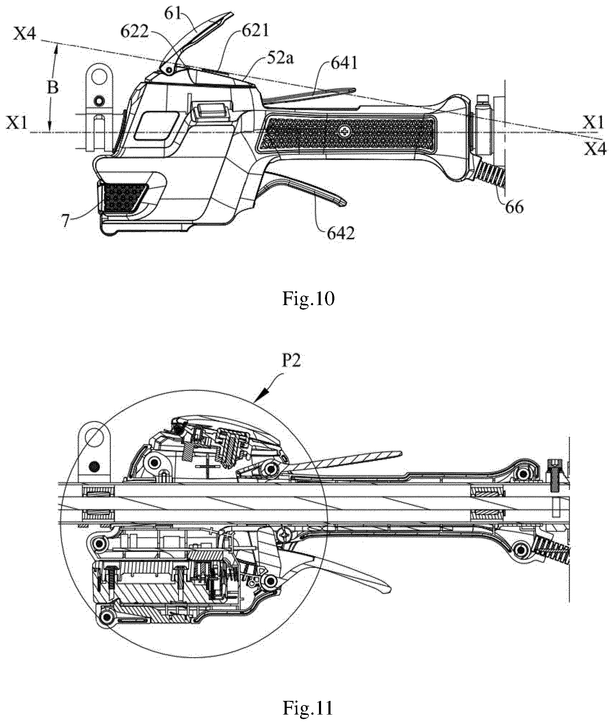

In a natural state, the cover 61 is in the closed state under the action of the torsion spring 63, as shown in Fig. 9, the start key 621 is hidden under the cover 61 and cannot be directly operated, so that the brush cutter is prevented from being unintentionally started. When the brush cutter needs to be started, a force which enables the free end of the cover 61 to rotate in the direction away from the second control portion top surface 52a is applied to the cover 61 by using a thumb, the cover 61 is jacked up by overcoming the elasticity of the torsion spring 63, so that the cover 61 is in an open state, as shown in Fig. 10, then the thumb is rapidly inserted into the cover 61, and the start key 621 is pressed, so that the micro switch 65 arranged below the start key 621 is activated, the start motor is electrified and started, and the crankshaft of the engine is driven to rotate, so that the engine is started. When the thumb is withdrawn from under the cover 61 in the open state, the cover 61 is restored to the closed state due to the torsion spring 63. In other embodiments, to meet the needs of the left-handed population, the flameout key 623 is provided on the second control portion right side surface 52d. In the present embodiment, the second operation unit 52 is only provided with the start key 621, the cover 61 matched with the start key 621, the flameout key 623, the self-locking key 641, and the throttle key 642, and can realize all functions of operating the brush cutter and meet safety requirements without additionally providing other keys or protection devices.

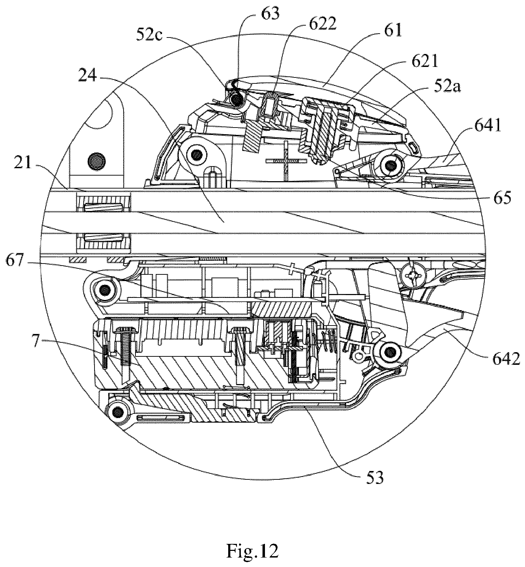

Referring to Fig. 12, a battery pack 7 for powering the electric starting motor and other electronic devices is configured to be mounted on the straight handle assembly 501. An indicator 622 is provided on the second control portion top surface 52a and in front of the start key 621, and the indicator 622 is controlled by a first control panel 67 and is used for indicating different working states of the battery pack 7; the cover 61 is constructed of a transparent material that does not interfere with the viewing of the indicator 622 whether the cover 61 is closed or opened.

The indicator 622 is constructed as a single two-color LED, making the handle space more concise and compact. Specifically, the indicator 622 adopts a two-color three-wire LED, and when the first control panel 67 detects that the voltage of the battery pack 7 is greater than a first preset value, a forward voltage is applied to the indicator 622, and the indicator 622 emits a first color light; when the first control panel 67 detects that the voltage of the battery pack 7 is less than the first preset value and greater than or equal to a second preset value, forward and reverse voltages are simultaneously applied to the indicator 622, and the indicator 622 emits a second color light; when the first control panel 67 detects that the voltage of the battery pack 7 is less than the second preset value, a reverse voltage is applied to the indicator 622, and the indicator 622 emits a third color light; the second color light is a mixed color light of the first color light and the third color light.

Preferably, the indicator 622 adopts a red-green two-color LED, the first color is green, the second color is orange, and the third color is red. For a battery pack 7 with a rated voltage of 7.2V, the first preset value is set to 7.7V, the second preset value is set to 7.2V, and the third preset value is set to 6.6V. When the indicator 622 emits green light, it indicates that the battery pack 7 is sufficiently charged; when the indicator 622 emits orange light, it indicates that the battery pack 7 is out of charge, but can continue to operate for a period of time; when the indicator 622 emits red light, it indicates that the battery pack 7 is low and should be charged as soon as possible.

In other embodiments, the indicator 622 may also adopt a two-color two-wire LED, and a high-frequency alternating positive and negative voltage is applied to the indicator 622 to realize emitting the second color light. In another embodiment, the specific values of the first preset value, the second preset value, and the third preset value may be adjusted according to the characteristics of the battery pack 7 itself and the discharge characteristics thereof.

On the basis of the above solution, different colored light alternately flashing can be added to indicate the abnormal state of the battery pack 7 or other electric components. Specifically, when the temperature of the battery pack 7 is too high, the indicator 622 alternately flashes between the second colored light and the non-light-emitting state at a frequency that can be perceived by the human eye; when the first control panel 67 detects the motor overcurrent, the indicator 622 alternately flashes between the first color light and the third color light at a frequency that can be perceived by human eyes; when the first control panel 67 detects a motor short circuit, the indicator 622 alternately flashes between the third color light and the non-light-emitting state at a frequency that can be perceived by the human eye. In the present embodiment, the frequency of the alternate blinking is 2 Hz. In other embodiments, different states corresponding to different colored lights and flashing modes can be adjusted according to specific situations.

Of course, the arrangement of the indicator 622 can also be applied to the first control portion, and will not be described herein again.

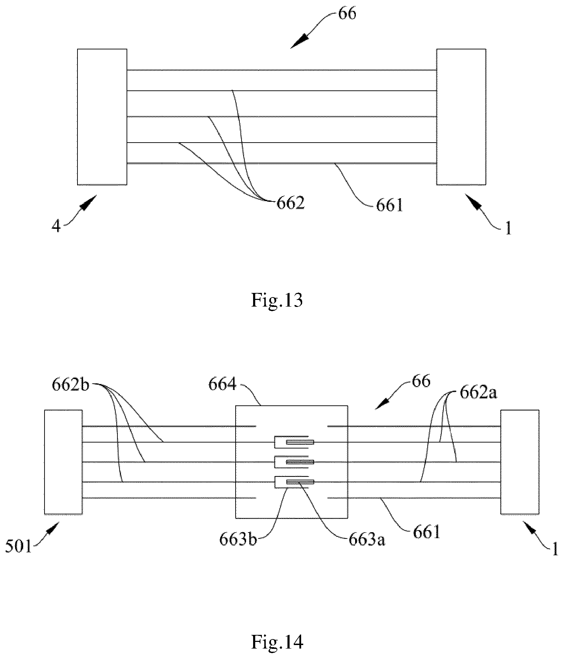

Referring to Figs. 1 and 13, the power assembly 1 is connected to the handle assembly by a cable assembly 66. The cable assembly 66 includes a number of complete cables 662, specifically three cables 662, with two of the cables 662 being used to transmit power and one of the cables 662 being used to transmit signals. When a fault occurs, and it is needed to be disassembled from the whole machine independently for maintenance, particularly to be returned to a factory for maintenance, because the two ends of the cable 662 are connected in the housing, it is necessary to at least partially disassemble the handle assembly or the power assembly 1 from the whole machine and remove the cable assembly, so that it can be disassembled from the whole machine, making the mounting and disassembly inconvenient.

Referring to Figs. 7 and 14, the cable assembly 66 includes a plurality of cables 662, wherein the cables 662 include a first cable 662a and a second cable 662b, one end of the first cable 662a is connected with the power assembly 1, and the other end of the first cable 662a has a first terminal 663a; one end of the second cable 662b is connected with the straight handle assembly 501, and the other end of the second cable 662b has a second terminal 663b. The first terminal 663a is detachably connected to the second terminal 663b, and the power assembly 1 is electrically connected to the straight handle assembly 501.

In the present embodiment, the first terminal 663a is matched with the second terminal in a plugging way the second terminal 663b in a plugging way, and specifically, the first terminal 663a is configured as a male terminal, and the second terminal 663b is configured as a female terminal. When the whole machine is assembled, the electrical connection between the straight handle assembly 501 and the power assembly 1 can be completed by simply plugging the first terminal 663a and the second terminal 663b. When the power assembly 1 needs to be disassembled, the power assembly 1 can be disassembled only by disconnecting the first terminal 663a and the second terminal 663b, and the complex work of disassembling the power assembly 1 is avoided.

However, cable joints are difficult to avoid with exposed conductor sections, so there is a risk of short circuits between different cables 662. In addition, since the vibration of the gasoline engine is transmitted to the cable assembly 66, the cable connector is easily caused to loosen. Even if the cable joints are respectively bound by using the insulating black adhesive tape and then all the cable joints are bound together to avoid the problem of short circuit or loosening, when it is needed to be assembled or disassembled, a plurality of adhesive tapes need to be wound and bound, making it quite cumbersome.

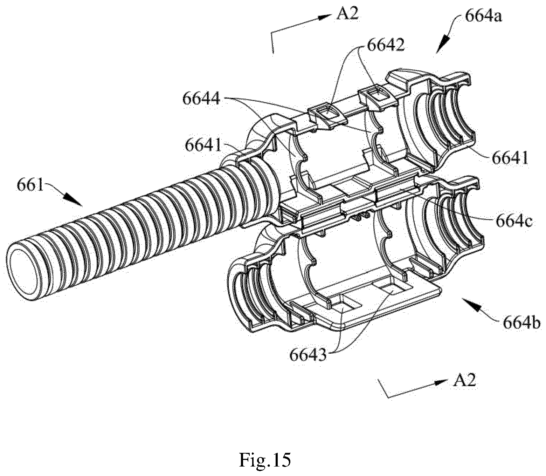

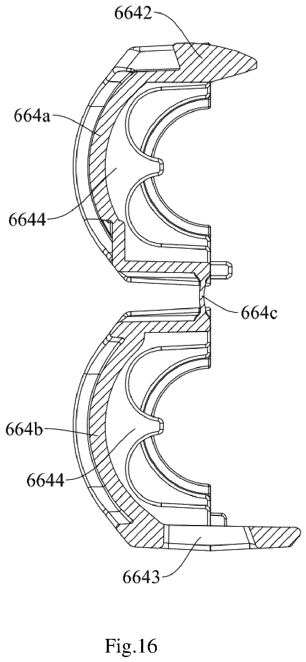

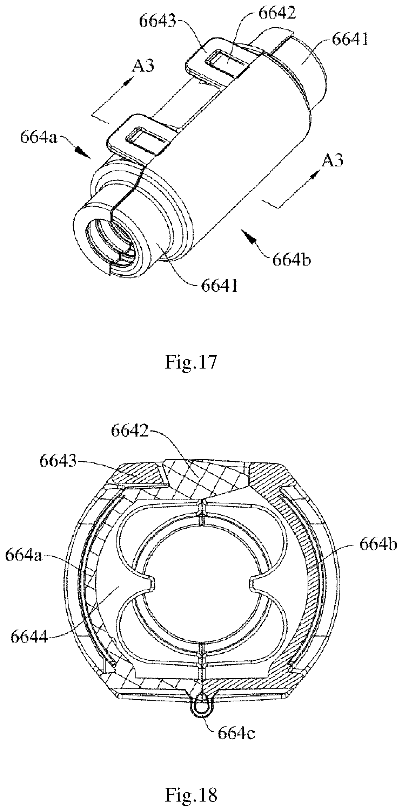

Referring to Figs. 15-18, the present embodiment designs a wire clip 664 constructed of an integral insulating plastic material and having a wire clip first portion 664a and a wire clip second portion 664b that are buckled together. When assembling the machine, the first terminal 663a and the second terminal 663b are placed between the wire clip first portion 664a and the wire clip second portion 664b, the wire clip first portion 664a is buckled with the wire clip second portion 664b, the wire clip 664 is changed from an open state to a buckled state, and the joint of the first cable 662a and the second cable 662b is hidden in the wire clip 664; when disassembling the machine, the buckling between the wire clip first portion 664a and the wire clip second portion 664b is released, the wire clip 664 is changed from the buckled state to the open state, the cable joint is exposed, and the first terminal 663a and the second terminal 663b can be separated.

When the wire clip first portion 664a and the wire clip second portion 664b are buckled together, an accommodating cavity can be formed for accommodating the cable joint, i.e., the joint of the first cable 662a and the second cable 662b is located in the accommodating cavity. Both ends of the accommodating cavity have openings through which the first cable 662a and the second cable 662b pass, respectively.

The wire clip first portion 664a and the wire clip second portion 664b form a generally tubular structure when buckled together, with the wire clip first portion 664a and the wire clip second portion 664b being generally symmetrically configured as half-tube structures. The tubular structure includes wire clip end portions 6641 disposed at both axial ends and a wire clip body between the two grip end portions 6641. The inner diameter of the wire clip body is relatively large, so that the first terminal 663a and the second terminal 663b can be conveniently accommodated; the inside diameter of the wire clip end portion 6641 is relatively small, and only the cable sleeve 661 or the cable 662 can pass through.

To improve the stability of the connection between the wire clip 664 and the cable assembly 66, the inner diameter of the wire clip end portion 6641 is configured to be approximately equal to the outer diameter of the cable sleeve 661. Further, the cable sleeve 661 adopts a corrugated tube, and the inner wall of the cable clip end portion 6641 is provided with a corrugated structure corresponding to corrugated sheets of the corrugated tube, so that on one hand, the axial sliding between the cable sleeve 661 and the cable clip 664 is avoided, and on the other hand, the waterproof performance of the matching surface of the cable sleeve 661 and the cable clip 664 is enhanced. The inner wall of the wire clip 664 is further provided with a supporting member 6644, the supporting member 6644 is constructed into a rib plate protruding inwards from the inner wall of the wire clip 664, and the wire clip first portion 664a and the wire clip second portion 664b, the supporting member 6644 are matched to clamp and fix the cable joint in the accommodating cavity to prevent the cable joint from shaking.

The wire clip first portion 664a and the wire clip second portion 664b are connected together by a wire clip connecting portion 664c, which is configured as a bendable sheet. The end of the wire clip first portion 664a away from the wire clip connecting portion 664c is provided with at least one first buckling member 6642, the end of the wire clip second portion 664b away from the wire clip connecting portion 664c is provided with a corresponding number of second buckling member 6643, and the first buckling member 6642 and the second buckling member 6643 can selectively keep or release buckle. In other embodiments, the wire clip first portion 664a and the wire clip second portion 664b are constructed as a completely separable structure, so long as the wire clip connecting portion 664c of the above-described aspect is replaced with another set of buckling members.

## Claims

1. A garden tool comprising a power assembly (1) and a handle assembly, wherein the handle assembly is provided with a start key (621) which is electrically connected with the power assembly (1); **characterized in that** the handle assembly is provided with a cover (61) capable of at least partially shielding the start key (621), and the cover (61) can be opened under the driving of external force so as to operate the start key (621); a reset member is provided between the cover (61) and the handle assembly, the reset member can drive the cover (61) to be closed.

2. The garden tool according to claim 1, wherein one side of the cover (61) is hinged with the handle assembly.

3. The garden tool according to claim 2, wherein the handle assembly is provided with a first shaft (422c), and the cover (61) is provided with a shaft hole (611) matched with the first shaft (422c).

4. The garden tool according to claim 3, wherein the reset member is a torsional spring (63) sleeved on the first shaft (422c), the one end of the torsional spring (63) abuts against the handle assembly, and the other end of the torsional spring (63) abuts against the cover (61).

5. The garden tool according to claim 1, wherein the handle assembly is a U-shaped handle assembly (4), the U-shaped handle assembly (4) comprises a U-shaped rod, a left handle (41) and a right handle (42) which are connected to the two ends of the U-shaped rod, and the start key (621) is arranged on the right handle (42).

6. The garden tool according to claim 5, wherein the right handle (42) comprises a first gripping portion (421) and a first operating portion (422), the first operating portion (422) is arranged at one end of the first gripping portion (421), the first operating portion (422) protrudes outwards relative to the periphery of the first gripping portion (421), and a first protruding portion (4214) is arranged at the other end of the first gripping portion (421) along the circumferential direction.

7. The garden tool according to claim 6, the extension direction of the first gripping portion (421) and the extension direction of the first operating portion (422) are set at an included angle A, and A is 0° to 90°.

8. The garden tool according to claim 6, wherein the start key (621) is arranged on the top surface (422a) of the first operating portion (422), and one side edge of the cover (61) is hinged to the top surface (422a) of the first operating portion (422).

9. The garden tool according to claim 8, wherein the handle assembly is further provided with a flameout key (623), a self-locking key (641) and a throttle key (642), the flameout key (623) is arranged on the left side surface (422b) of the first operating portion (422), the self-locking key (641) is arranged on the top surface (4211) of the first gripping portion (421), and the throttle key (642) is arranged on the bottom surface (4212) of the first gripping portion (421).

10. The garden tool according to claim 1, wherein the handle assembly comprises a straight handle assembly (501) and an auxiliary handle assembly (502), and the start key (621) is arranged on the straight handle assembly (501).

11. The garden tool according to claim 10, wherein the straight handle assembly (501) comprises a second gripping portion (51) and a second operating portion (52), the second operating portion (52) is arranged at one end of the second gripping portion (51), and a second protruding portion (514) is arranged at the other end of the second gripping portion (51) along the circumferential direction.

12. The garden tool according to claim 11, wherein the straight handle assembly (501) further comprises a battery mounting portion (53), the battery mounting portion (53) is arranged below the second operating portion (52), and the second operating portion (52) and the battery mounting portion (53) respectively protrude outwards in the upper direction and the lower direction relative to the outer periphery of the second gripping portion (51).

13. The garden tool according to claim 11, wherein the extension direction of the second gripping portion (51) and the extension direction of the second operating portion (52) are set at an included angle B, and B is 0° to 90°.

14. The garden tool according to claim 11, wherein the start key (621) is arranged on the top surface (52a) of the second operating portion (52), and one side edge of the cover (61) is hinged to the top surface (52a) of the second operating portion (52).

15. The garden tool according to anyone of claim 1-14, wherein the cover (61) is transparent material.

## Patentansprüche

1. Ein Gartenwerkzeug, das eine Antriebsanordnung (1) und eine Griffanordnung beinhaltet, wobei die Griffanordnung mit einem Startschlüssel (621) bereitgestellt ist, der mit der Antriebsanordnung (1) elektrisch verbunden ist; **dadurch gekennzeichnet, dass** die Griffanordnung mit einer Abdeckung (61) bereitgestellt ist, die den Startschlüssel (621) mindestens teilweise abschirmt, und die Abdeckung (61) unter dem Treiben von äußerer Kraft geöffnet werden kann, um den Startschlüssel (621) zu betreiben; wobei ein Rücksetzelement zwischen der Abdeckung (61) und der Griffanordnung bereitgestellt wird, wobei das Rücksetzelement die Abdeckung (61) treiben kann, um geschlossen zu sein.

2. Gartenwerkzeug gemäß Anspruch 1, wobei eine Seite der Abdeckung (61) mit der Griffanordnung gelenkig verbunden ist.

3. Gartenwerkzeug gemäß Anspruch 2, wobei die Griffanordnung mit einem ersten Schaft (422c) bereitgestellt ist und die Abdeckung (61) mit einem Schaftloch (611) bereitgestellt ist, das zu dem ersten Schaft (422c) passt.

4. Gartenwerkzeug gemäß Anspruch 3, wobei das Rücksetzelement eine Torsionsfeder (63) ist, die auf den ersten Schaft (422c) geschoben ist, wobei das eine Ende der Torsionsfeder (63) gegen die Griffanordnung stößt und das andere Ende der Torsionsfeder (63) gegen die Abdeckung (61) stößt.

5. Gartenwerkzeug gemäß Anspruch 1, wobei die Griffanordnung eine U-förmige Griffanordnung (4) ist, wobei die U-förmige Griffanordnung (4) eine U-förmige Stange, einen linken Griff (41) und einen rechten Griff (42) beinhaltet, die mit den zwei Enden der U-förmigen Stange verbunden sind, und der Startschlüssel (621) auf dem rechten Griff (42) eingerichtet ist.

6. Gartenwerkzeug gemäß Anspruch 5, wobei der rechte Griff (42) einen ersten Griffabschnitt (421) und einen ersten Betriebsabschnitt (422) beinhaltet, wobei der erste Betriebsabschnitt (422) an einem Ende des ersten Griffabschnitts (421) eingerichtet ist, wobei der erste Betriebsabschnitt (422) relativ zu dem Umfang des ersten Griffabschnitts (421) nach außen vorsteht und ein erster vorstehender Abschnitt (4214) an dem anderen Ende des ersten Griffabschnitts (421) entlang der Umfangsrichtung eingerichtet ist.

7. Gartenwerkzeug gemäß Anspruch 6, wobei die Erweiterungsrichtung des ersten Griffabschnitts (421) und die Erweiterungsrichtung des ersten Betriebsabschnitts (422) in einem eingeschlossenen Winkel A eingestellt sind und A 0° bis 90° beträgt.

8. Gartenwerkzeug gemäß Anspruch 6, wobei der Startschlüssel (621) auf der oberen Oberfläche (422a) des ersten Betriebsabschnitts (422) eingerichtet ist und eine Seitenkante der Abdeckung (61) mit der oberen Oberfläche (422a) des ersten Betriebsabschnitts (422) gelenkig verbunden ist.

9. Gartenwerkzeug gemäß Anspruch 8, wobei die Griffanordnung ferner mit einem Flammendurchschlagschlüssel (623), einem selbstverschließenden Schlüssel (641) und einem Drosselschlüssel (642) bereitgestellt ist, wobei der Flammendurchschlagschlüssel (623) auf der linken Seitenoberfläche (422b) des ersten Betriebsabschnitts (422) eingerichtet ist, wobei der selbstverschließende Schlüssel (641) auf der oberen Oberfläche (4211) des ersten Griffabschnitts (421) eingerichtet ist und der Drosselschlüssel (642) auf der unteren Oberfläche (4212) des ersten Griffabschnitts (421) eingerichtet ist.

10. Gartenwerkzeug gemäß Anspruch 1, wobei die Griffanordnung eine gerade Griffanordnung (501) und eine Hilfsgriffanordnung (502) beinhaltet und der Startschlüssel (621) auf der geraden Griffanordnung (501) eingerichtet ist.

11. Gartenwerkzeug gemäß Anspruch 10, wobei die gerade Griffanordnung (501) einen zweiten Griffabschnitt (51) und einen zweiten Betriebsabschnitt (52) beinhaltet, wobei der zweite Betriebsabschnitt (52) an einem Ende des zweiten Griffabschnitts (51) eingerichtet ist und ein zweiter vorstehender Abschnitt (514) an dem anderen Ende des zweiten Griffabschnitts (51) entlang der Umfangsrichtung eingerichtet ist.

12. Gartenwerkzeug gemäß Anspruch 11, wobei die gerade Griffanordnung (501) ferner einen Abschnitt (53) zur Batteriemontage beinhaltet, wobei der Abschnitt (53) zur Batteriemontage unter dem zweiten Batterieabschnitt (52) eingerichtet ist und der zweite Betriebsabschnitt (52) und der Abschnitt (53) zur Batteriemontage jeweils relativ zu dem äußeren Umfang des zweiten Griffabschnitts (51) nach außen in die obere Richtung und die untere Richtung vorstehen.

13. Gartenwerkzeug gemäß Anspruch 11, wobei die Erweiterungsrichtung des zweiten Griffabschnitts (51) und die Erweiterungsrichtung des zweiten Betriebsabschnitts (52) in einem eingeschlossenen Winkel B eingestellt sind und B 0° bis 90° beträgt.

14. Gartenwerkzeug gemäß Anspruch 11, wobei der Startschlüssel (621) auf der oberen Oberfläche (52a) des zweiten Betriebsabschnitts (52) eingerichtet ist und eine Seitenkante der Abdeckung (61) mit der oberen Oberfläche (52a) des zweiten Betriebsabschnitts (52) gelenkig verbunden ist.

15. Gartenwerkzeug gemäß einem der Ansprüche 1-14, wobei die Abdeckung (61) transparentes Material ist.

## Revendications

1. Outil de jardin comprenant un ensemble de puissance (1) et un ensemble formant poignée, l'ensemble formant poignée étant muni d'un bouton-poussoir de démarrage (621) qui est électriquement raccordé à l'ensemble de puissance (1) ; **caractérisé en ce que** l'ensemble formant poignée est muni d'un couvercle (61) capable de protéger au moins en partie le bouton-poussoir de démarrage (621), et le couvercle (61) peut être ouvert sous l'entraînement d'une force extérieure afin d'actionner le bouton-poussoir de démarrage (621) ; un élément de remise à l'état initial est prévu entre le couvercle (61) et l'ensemble formant poignée, l'élément de remise à l'état initial pouvant entraîner la fermeture du couvercle (61).

2. L'outil de jardin selon la revendication 1, dans lequel un côté du couvercle (61) est relié à l'aide d'une charnière à l'ensemble formant poignée.

3. L'outil de jardin selon la revendication 2, dans lequel l'ensemble formant poignée est muni d'un premier arbre (422c), et le couvercle (61) est muni d'un trou d'arbre (611) apparié au premier arbre (422c).

4. L'outil de jardin selon la revendication 3, dans lequel l'élément de remise à l'état initial est un ressort de torsion (63) manchonné sur le premier arbre (422c), une extrémité du ressort de torsion (63) bute contre l'ensemble formant poignée, et l'autre extrémité du ressort de torsion (63) bute contre le couvercle (61).

5. L'outil de jardin selon la revendication 1, dans lequel l'ensemble formant poignée est un ensemble formant poignée (4) en forme de U, l'ensemble formant poignée (4) en forme de U comprend une barre en forme de U, une poignée gauche (41) et une poignée droite (42) qui sont raccordées aux deux extrémités de la barre en forme de U, et le bouton-poussoir de démarrage (621) est disposé sur la poignée droite (42).

6. L'outil de jardin selon la revendication 5, dans lequel la poignée droite (42) comprend une première portion de préhension (421) et une première portion d'actionnement (422), la première portion d'actionnement (422) est disposée à une extrémité de la première portion de préhension (421), la première portion d'actionnement (422) fait saillie vers l'extérieur relativement à la périphérie de la première portion de préhension (421), et une première portion saillante (4214) est disposée à l'autre extrémité de la première portion de préhension (421) suivant le sens de la circonférence.

7. L'outil de jardin selon la revendication 6, dans lequel la direction dans laquelle s'étend la première portion de préhension (421) et la direction dans laquelle s'étend la première portion d'actionnement (422) sont établies à un angle inclus A, et A va de 0° à 90°.

8. L'outil de jardin selon la revendication 6, dans lequel le bouton-poussoir de démarrage (621) est disposé sur la surface de dessus (422a) de la première portion d'actionnement (422), et un bord latéral du couvercle (61) est relié à l'aide d'une charnière à la surface de dessus (422a) de la première portion d'actionnement (422).

9. L'outil de jardin selon la revendication 8, dans lequel l'ensemble formant poignée est en outre muni d'un bouton-poussoir d'extinction (623), d'un bouton-poussoir de verrouillage automatique (641) et d'un bouton-poussoir d'accélération (642), le bouton-poussoir d'extinction (623) est disposé sur la surface de côté gauche (422b) de la première portion d'actionnement (422), le bouton-poussoir de verrouillage automatique (641) est disposé sur la surface de dessus (4211) de la première portion de préhension (421), et le bouton-poussoir d'accélération (642) est disposé sur la surface de dessous (4212) de la première portion de préhension (421).

10. L'outil de jardin selon la revendication 1, dans lequel l'ensemble formant poignée comprend un ensemble formant poignée (501) droit et un ensemble formant poignée (502) auxiliaire, et le bouton-poussoir de démarrage (621) est disposé sur l'ensemble formant poignée (501) droit.

11. L'outil de jardin selon la revendication 10, dans lequel l'ensemble formant poignée (501) droit comprend une deuxième portion de préhension (51) et une deuxième portion d'actionnement (52), la deuxième portion d'actionnement (52) est disposée à une extrémité de la deuxième portion de préhension (51), et une deuxième portion saillante (514) est disposée à l'autre extrémité de la deuxième portion de préhension (51) suivant le sens de la circonférence.

12. L'outil de jardin selon la revendication 11, dans lequel l'ensemble formant poignée (501) droit comprend en outre une portion de montage de batterie (53), la portion de montage de batterie (53) est disposée en dessous de la deuxième portion d'actionnement (52), et la deuxième portion d'actionnement (52) et la portion de montage de batterie (53) font respectivement saillie vers l'extérieur vers le haut et vers le bas relativement à la périphérie externe de la deuxième portion de préhension (51).

13. L'outil de jardin selon la revendication 11, dans lequel la direction dans laquelle s'étend la deuxième portion de préhension (51) et la direction dans laquelle s'étend la deuxième portion d'actionnement (52) sont établies à un angle inclus B, et B va de 0° à 90°.

14. L'outil de jardin selon la revendication 11, dans lequel le bouton-poussoir de démarrage (621) est disposé sur la surface de dessus (52a) de la deuxième portion d'actionnement (52), et un bord latéral du couvercle (61) est relié à l'aide d'une charnière à la surface de dessus (52a) de la deuxième portion d'actionnement (52).

15. L'outil de jardin selon n'importe lesquelles des revendications 1 à 14, dans lequel le couvercle (61) est en un matériau transparent.
